# FASCICULE DE BREVET EUROPEEN

(11) **EP 0 964 357 B1**
(45) Date de publication et mention de la délivrance du brevet: **25.07.2007**
(21) Numéro de dépôt: 99401380.3
(22) Date de dépôt: 09.06.1999
(51) Int. Cl.: G06K 13/08

(54) **Agencement pour le blocage d'un support de données dans un dispositif d'échange de données**
Anordnung zum Blockieren eines Datenträgers in einer Datenaustausch-Vorrichtung
Arrangement for blocking a data carrier in a device for data exchange

(30) Priorité: 09.06.1998 FR 9807249
(43) Date de publication de la demande: 15.12.1999
(73) Titulaire: VALEO SECURITE HABITACLE S.A.S., 94042 Créteil Cédex (FR); RENAULT s.a.s., 92100 Boulogne Billancourt (FR)
(72) Inventeur: Canard, Louis, 58000 Nevers (FR); Thiebaud, Fabrice, 36330 Le Poinçonnet (FR)
(74) Mandataire: Kohn, Philippe

(56) Documents cités:
- FR-A- 2 713 173
- US-A- 4 887 188
- US-A- 5 054 119

## Description

La présente invention concerne un agencement pour l'échange de données entre un support de données rigide, ou semi-rigide, et un dispositif d'échange de données, notamment de lecture de données contenues dans le support.

L'invention concerne plus particulièrement un tel agencement destiné à équiper un véhicule automobile et dans lequel le support de données, qui est par exemple en forme de carte ou de badge globalement rectangulaire, porte des données d'identification de l'utilisateur du véhicule qui l'autorisent lorsqu'il introduit son badge dans le dispositif de lecture, à utiliser le véhicule en lui permettant notamment de procéder au démarrage du moteur du véhicule comme par example dans l'agencement montré dans le document FR-2713173.

On connaît de nombreux exemples de tels agencements dans lesquels le support de données est une carte rigide ou semi-rigide comportant par exemple un circuit intégré, ou puce, qui est relié à des moyens de lecture du dispositif par des contacts électriques et/ou par une antenne d'échange de données.

Lors de l'introduction du badge ou de la carte dans le dispositif, celle-ci est introduite manuellement d'arrière en avant dans un logement du boîtier dans lequel le support de données occupe une position active déterminée, et le dispositif qui reçoit la carte ou le badge comporte des moyens pour retenir longitudinalement ce support de données en position active dans le boîtier de manière que l'échange de données soit assuré dans de bonnes conditions.

Selon la conception la plus répandue, ces moyens de retenue sont constitués par des simples freins, c'est-à-dire qu'il s'agit de pattes déformables élastiquement qui coopèrent par friction avec des bords latéraux et/ou avec les grandes faces de la carte. D'autres moyens de retenue sont montrés dans le document US-4887188.

Une telle conception des moyens de retenue du support de données dans le dispositif de lecture n'est pas entièrement satisfaisante dans le cas d'une application à un véhicule automobile dans lequel le dispositif est soumis, lors du roulage, à de nombreuses vibrations qui provoquent progressivement l'éjection du support de données, ou tout au moins son déplacement par rapport à sa position active dite de lecture.

De plus, dans le cas d'une application à un véhicule automobile, il est nécessaire de pouvoir non seulement retenir le support de données en position active, mais aussi le verrouiller en le bloquant dans cette position, en réponse à un ordre de commande de verrouillage, de manière à éviter que dans certaines configurations d'utilisation du véhicule, le conducteur ou un passager puisse extraire inopinément le support de données du dispositif de lecture.

Dans ce but, l'invention propose un agencement pour l'échange de données entre un support de données rigide, ou semi-rigide, et un dispositif d'échange de données, notamment de lecture de données contenues dans le support, du type comportant un boîtier dans lequel le support en forme générale de carte est introduit manuellement d'arrière en avant dans un logement du boîtier dans lequel il occupe une position active déterminée, et du type dans lequel le dispositif comporte des moyens pour retenir longitudinalement le support de données en position active dans le boîtier, caractérisé en ce que le support de données comporte, dans un bord d'orientation longitudinale, un cran latéral de blocage, et en ce que le boîtier comporte un levier commandé de blocage du support qui est monté pivotant, autour d'un axe vertical perpendiculaire au plan dans lequel est située la direction longitudinale d'introduction du support de données dans le boîtier, entre une position de blocage dans laquelle l'extrémité libre du levier de blocage s'étend à l'intérieur du cran de blocage, et une position escamotée dans laquelle le doigt de blocage est situé hors du cran pour permettre l'extraction du support de données hors du boîtier.

Selon d'autres caractéristiques de l'invention :
- le pivotement du levier de blocage de sa position escamotée vers sa position de blocage est commandé par un bouton de commande qui est monté coulissant longitudinalement par rapport au boîtier et qui est relié au levier de commande par une barre de renvoi dont les deux extrémités arrière et avant sont articulées, sur le bouton de commande et sur le levier de blocage respectivement, autour d'axes verticaux ;
- en position de blocage, le levier de blocage s'étend sensiblement selon la direction transversale, et un bord avant de son extrémité libre de blocage s'étend en regard d'un tronçon transversal en vis-à-vis du cran de blocage qui se prolonge vers l'arrière par un tronçon en arc de cercle pour permettre l'effacement de l'extrémité libre de blocage hors du cran de blocage lorsque le support de données est extrait hors de son logement ;
- le bouton de commande est monté coulissant longitudinalement par rapport au boîtier entre une position sortie vers l'arrière dans laquelle le levier de blocage est en position escamotée, et une position rentrée vers l'avant dans laquelle le levier de blocage est dans sa position de blocage du support de données;
- le bouton de commande est associé à un interrupteur marche/arrêt qui commande un circuit électrique, par exemple de démarrage d'un véhicule, la position sortie du bouton correspond à la position d'arrêt de l'interrupteur, et la position rentrée du bouton correspond à la position marche de l'interrupteur ;
- l'agencement comporte des moyens d'indexation du support de données dans le logement dans sa position active ;
- l'agencement équipe un véhicule automobile dont les fonctions d'antivol sont partiellement ou totalement assurées par traitement de données dont certaines, contenues dans le support de données, sont représentatives d'un utilisateur autorisé, ou d'un groupe d'utilisateurs autorisés, du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective avec arrachement partiel qui illustre schématiquement les principaux composants d'un agencement conforme aux enseignements de l'invention sur laquelle le badge formant support de données est illustré dans une position en cours d'introduction dans le boîtier ;
- la figure 2 est une vue schématique simplifiée de dessus sur laquelle les éléments sont illustrés dans leur position correspondant à celle de la figure 1 ;
- la figure 3 est une vue similaire à celle de la figure 2 sur laquelle le badge est illustré dans sa position longitudinale active dans laquelle il est introduit au maximum dans le boîtier, avant son blocage ; et
- la figure 4 est une vue similaire à celle de la figure 3 illustrant sur laquelle le badge est illustré en position active et bloqué dans cette position.

Dans la description qui va suivre, les termes "vertical", "horizontal", "supérieur", "inférieur", "avant", "arrière", etc. sont utilisés en référence aux figures.

Comme on peut le voir sur les figures, l'agencement 10 réalisé conformément aux enseignements de l'invention est constitué pour l'essentiel par un support de données ou badge 12 et par un boîtier 14.

Le badge 12 est ici un élément rigide de forme générale rectangulaire et d'épaisseur réduite qui comporte un bord transversal arrière 16 qui constitue une partie de préhension.

Le badge 12 est aussi délimité par un bord transversal avant 18, par deux faces planes principales supérieure 20 et inférieure 22 et par deux bords parallèles longitudinaux et opposés 24 et 26.

Le boîtier est ici représenté schématiquement sous la forme d'une pièce comportant deux plaques principales parallèles supérieure 28 et inférieure 30 qui délimitent entre elles un logement de forme générale parallélépipédique rectangle en forme de fente horizontale 32 qui est fermée à son extrémité avant par un fond 34 et dont l'extrémité arrière 36 est ouverte pour permettre l'introduction longitudinale d'arrière en avant du badge 12 selon une direction d'introduction I.

Les bords transversaux avant des deux plaques 28 et 30 comportent chacun une échancrure 38 facilitant la prise en main de la partie de préhension du badge 12 lorsque celui-ci est entièrement introduit dans le logement 32, c'est-à-dire que son bord transversal avant 18 est en butée contre une face transversale verticale 40 formée en vis-à-vis dans le logement 32.

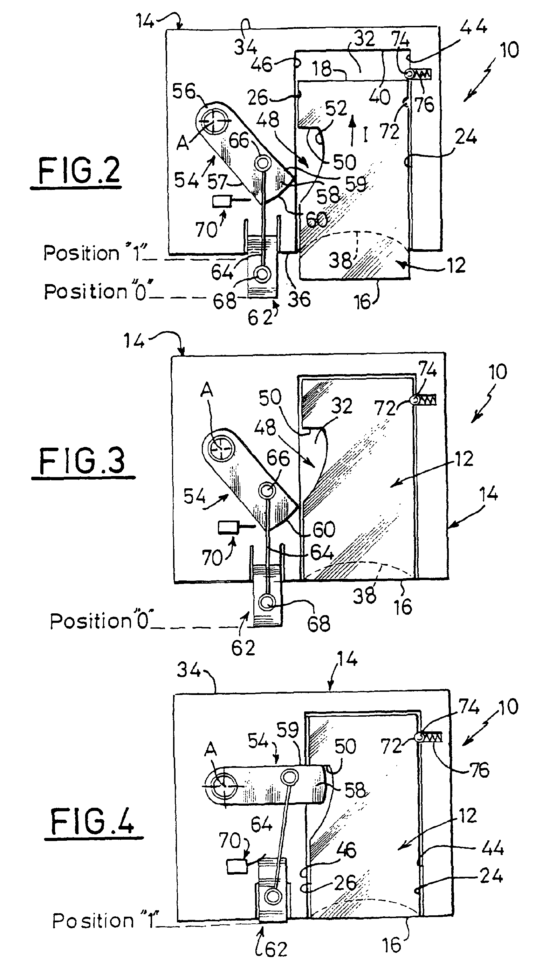

Comme on peut le voir plus particulièrement aux figures 2 à 4, les mouvements d'introduction et d'extraction du badge 12 dans le logement 32 qui sont guidés en coulissement par ses bords longitudinaux 24 et 26 sont reçus avec un léger jeu transversal entre des bords parallèles en vis-à-vis 44 et 46 du logement 32.

Conformément aux enseignements de l'invention, le bord longitudinal 26, c'est-à-dire le bord de gauche en considérant les figures, comporte un cran 48 de blocage du badge 12.

Le cran ou échancrure 48 est délimité par un bord transversal avant 50 rectiligne qui s'étend transversalement, c'est-à-dire perpendiculairement au bord longitudinal 26 et à la direction d'introduction l.

Le bord transversal 50 se prolonge longitudinalement vers l'arrière par un bord en arc de cercle 52.

Les moyens de blocage du badge 12 dans le boîtier 14 sont constitués par un levier commandé 54 de blocage.

Le levier 54 est réalisé sous la forme d'une plaque horizontale dont l'extrémité avant 56 est montée articulée dans le boîtier 14 autour d'un axe de pivotement A qui est perpendiculaire au plan général de la carte et donc au plan qui contient la direction d'introduction l.

La position de l'axe A est fixe par rapport au boîtier.

L'extrémité avant 58 du levier de blocage 54 est une extrémité libre qui constitue l'extrémité de blocage du badge 12.

Le bord d'extrémité libre 60 est arrondi en arc de cercle centré autour de l'axe A.

La commande en pivotement dans les deux sens du levier de blocage 54 est assurée par l'intermédiaire d'un bouton 62 formant poussoir de commande qui est monté coulissant par rapport au boîtier 14 selon une direction parallèle à la direction d'introduction l.

Le bouton de commande est relié au levier de commande 54 par une tige ou barre de renvoi de mouvement 64 qui, à la manière d'une bielle, a ses deux extrémités longitudinales opposées avant 66 et arrière 68 montées articulées respectivement sur le levier de blocage 54 et sur le corps du bouton de commande 62 autour d'axes verticaux parallèles.

Comme on peut le voir sur les figures, l'axe d'articulation de l'extrémité avant 66 de la barre de renvoi 64 est situé entre l'axe A d'articulation du levier de blocage 54 et son extrémité libre 58 de blocage.

Le bouton de commande 62 est monté mobile par rapport au boîtier entre une position extrême arrière sortie désignée par la position "0" sur les figures (voir figure 2) et une position extrême avant rentrée (voir figure 4) désignée par la position "1" sur les figures.

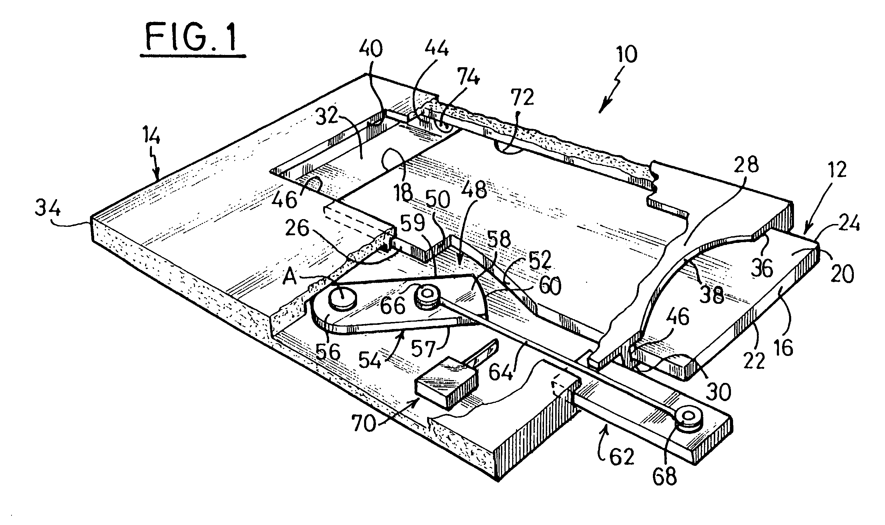

Le bouton de commande 62 du levier de blocage 54 constitue ainsi un interrupteur marche/arrêt qui peut aussi agir sur un commutateur électrique 70 (représenté à la figure 1) relié à un circuit électrique (non représenté).

Des moyens d'indexation en position active du badge 12 sont prévus conformément à une caractéristique de l'invention.

Ces moyens sont constitués par une encoche 72 formée dans le bord longitudinal de droite 24 du badge 12 qui est une encoche en arc de cercle qui est susceptible de recevoir une bille d'indexation 74 sollicitée élastiquement par un ressort de rappel 76 pour faire saillie dans le bord longitudinal 44 du logement 32.

On décrira maintenant le fonctionnement de l'agencement conforme aux enseignements de l'invention, en se reportant notamment aux figures 2 à 4.

Sur la figure 2, le levier de blocage 54 est illustré dans sa position escamotée et le bouton de commande 62 est représenté dans sa position "0", c'est-à-dire dans sa position dite d'arrêt.

Il est donc possible d'introduire un badge 12 longitudinalement d'arrière en avant dans la fente 32 jusqu'à ce que, dans un premier temps, son bord transversal avant 18 vienne en butée contre la bille d'indexation 74.

A partir de cette position, le mouvement longitudinal d'introduction du badge 12 se poursuit jusqu'à la position illustrée à la figure 3 en appliquant un effort légèrement supérieur au badge de manière à vaincre l'effort de freinage résultant de l'action de la bille 74.

Le mouvement d'introduction se termine, comme illustré à la figure 3, lorsque la face transversale avant 18 est en butée contre le fond 40 du logement 32.

Le badge 12 est indexé dans cette position par la bille 74 qui est reçue dans l'encoche 72 formée dans le bord 24.

L'introduction du badge 12 est restée sans effet sur le levier de blocage 54 et sur le bouton de commande 62 qui est toujours dans sa position "0", c'est-à-dire dans la position d'arrêt du circuit électrique associé.

A partir de la position illustrée à la figure 3, il est possible à l'utilisateur d'agir sur l'interrupteur 62 en vue d'enfoncer celui-ci longitudinalement à l'intérieur du boîtier 14, c'est-à-dire en poussant de bas en haut en considérant la figure 3.

Cette action sur le bouton 62 permet de le déplacer de sa position "0", ou position sortie, jusqu'à sa position "1", c'est-à-dire sa position rentrée illustrée à la figure 4.

La course longitudinale d'arrière en avant du bouton de commande 62 provoque, sous l'action de la tige de renvoi 64, le pivotement, dans le sens anti-horaire en considérant les figures 3 et 4, du levier de blocage 54.

Lors de ce mouvement de pivotement du levier 54, son extrémité libre de blocage 58 peut pénétrer à l'intérieur du cran de blocage 52 dans la mesure où il existe un jeu radial entre son bord d'extrémité libre curviligne 60 et le bord en arc de cercle 52 du cran de blocage 48.

La course du levier de blocage 54, et du bouton de commande 62, se termine lorsque le bord longitudinal avant 59 de la partie d'extrémité libre 58 du levier de blocage 54, qui est un bord rectiligne, vient en butée contre le bord transversal 50 du cran de blocage 48.

Dans cette position, le levier de blocage 54 s'étend globalement selon la direction transversale et le levier 54 participe, avec les moyens d'indexation 72, 74, 76 au blocage du badge 12 à l'intérieur du boîtier 14.

Le bouton de commande 62 peut être, selon une conception connue, un bouton du type "push-pull", c'est-à-dire qu'il demeure maintenu dans sa position enfoncée (ou position de marche) par des moyens complémentaires (non représentés) du type à "came-coeur" retenant ainsi le levier de blocage 54 dans sa position angulaire de blocage illustrée à la figure 4.

Il est donc impossible d'extraire longitudinalement le badge 12 hors du boîtier 14 tant que le levier de blocage 54 est dans sa position angulaire de blocage illustrée à la figure 4.

En position enfoncée, ou position de marche, le bouton de commande 62 agit sur le commutateur 70 pour alimenter un circuit électrique, par exemple un circuit de démarrage du moteur du véhicule qui est associé à des moyens d'échange de données avec celles contenues dans le badge 12 afin d'autoriser ou non un ordre de démarrage du moteur du véhicule.

Lorsque l'on veut extraire le badge 12 hors du boîtier 14, il est au préalable nécessaire d'agir sur le bouton de commande 62 afin de ramener celui-ci dans sa position "0" pour escamoter le levier de blocage 54, c'est-à-dire pour le ramener dans sa position escamotée illustrée aux figures 2 et 3.

Dans le cas où le bouton de commande 62 est un bouton du type "push-pull", ce retour du bouton de commande 62 à sa position "0" est une action nécessaire et préalable à l'extraction du badge 12.

Dans une autre conception dans laquelle le bouton de commande 62 n'est pas retenu dans sa position enfoncée ou position "1", le fait d'extraire le badge 12 en exerçant un effort de traction important sur celui-ci, de haut en bas en considérant la figure 4, provoque le pivotement dans le sens horaire du levier de blocage qui s'escamote en même temps que l'on extrait le badge 12 et qui provoque la sortie du bouton de commande 62, c'est-à-dire le retour de ce dernier à sa position "0" sous l'action de la barre de renvoi 64.

Comme on le comprend en regardant les figures, et notamment la figure 2, on constate qu'il est possible d'enfoncer le bouton de commande 62, et donc de provoquer un pivotement dans le sens anti-horaire du levier de blocage 54, en l'absence de badge 12 dans le boîtier 14.

Toutefois, si aucun badge 12 n'est présent dans le boîtier 14, le circuit de traitement de données associé au circuit de démarrage commandé par le bouton 62 interdira la mise en marche du moteur.

Dans une variante non représentée, les moyens d'indexation 72 et 74 peuvent être associés à un commutateur complémentaire qui permet de produire un signal représentatif de l'introduction en position active ou de l'extraction du badge 12, ce signal pouvant être utilisé dans le circuit de traitement des données.

Enfin, au cas où un utilisateur aurait inopinément enfoncé le bouton de commande 62 en l'absence d'un badge 12 et que cet utilisateur tenterait ensuite d'introduire le badge dans le boîtier 14, il constaterait visuellement que le badge ne peut pas être introduit entièrement puisque son bord transversal avant 18 viendrait alors buter contre le bord longitudinal arrière 57 du levier de blocage, ce dernier étant dans sa position transversale correspondant à la position de blocage du badge 12.

L'invention trouve notamment à s'appliquer à bord d'un véhicule automobile dont les fonctions d'antivol sont partiellement ou totalement assurées par traitement de données dont certaines, contenues dans le support ou badge 12, sont représentatives d'un utilisateur autorisé, ou d'un groupe d'utilisateurs autorisés, du véhicule.

Le traitement des données vise notamment à comparer les données contenues dans le badge 12 avec des données mémorisées à bord du véhicule en vue de permettre l'utilisation autorisée du véhicule, le ou les circuits de traitement assurant la commande totale ou partielle de moyens formant antivol, qu'il s'agisse d'un antivol classique, c'est-à-dire agissant sur la colonne de direction du véhicule, et/ou de moyens empêchant le démarrage du moteur du véhicule et/ou interrompant le fonctionnement du moteur.

## Revendications

1. Agencement (10) pour l'échange de données entre un support de données rigide (12), ou semi-rigide, et un dispositif (14) d'échange de données, notamment de lecture de données contenues dans le support, l'agencement (10) équipant un véhicule automobile dont les fonctions d'antivol sont partiellement ou totalement assurées par traitement de données dont certaines, contenues dans le support de données (12), sont représentatives d'un utilisateur autorisé, ou d'un groupe d'utilisateurs autorisés, du véhicule, et comportant un dispositif (14) dans lequel le support (12) en forme générale de carte est introduit manuellement d'arrière en avant dans un logement (32) du dispositif (14) dans lequel il occupe une position active déterminée, dans lequel agencement (10) le dispositif (14) comporte des moyens pour retenir longitudinalement le support de données (12) en position active dans le dispositif, et dans lequel le support de données (12) comporte, dans un bord (26) d'orientation longitudinale, un cran latéral (48) de blocage, et le dispositif (14) comporte un levier commandé (54) de blocage du support (12) qui est monté pivotant, autour d'un axe vertical (A) perpendiculaire au plan dans lequel est située la direction (I) longitudinale d'introduction du support de données (12) dans le dispositif, entre une position de blocage dans laquelle l'extrémité libre (58) du levier de blocage (54), ou doigt de blocage, s'étend à l'intérieur du cran de blocage (48), et une position escamotée dans laquelle le doigt de blocage (54, 58) est situé hors du cran (48) pour permettre l'extraction du support de données (12) hors du dispositif (14), l'agencement (10) comporte un bouton de commande (62) qui commande le pivotement du levier de blocage (54) de sa position escamotée vers sa position de blocage, **caractérisé en ce que** le bouton est monté coulissant longitudinalement par rapport au dispositif (14) entre une position sortie vers l'arrière (POS "0") dans laquelle le levier de blocage (54) est en position escamotée, et une position rentrée vers l'avant (POS "1") dans laquelle le levier de blocage (54) est dans sa position de blocage du support de données (12), ledit bouton de commande (62) sur lequel l'utilisateur est susceptible d'agir étant associé à un interrupteur marche/arrêt (70) qui commande un circuit électrique de démarrage du véhicule, la position sortie (POS "0") du bouton (62) correspondant à la position d'arrêt de l'interrupteur et la position rentrée (POS "1") du bouton correspondant à la position marche de l'interrupteur.

2. Agencement selon la revendication 1, **caractérisé en ce que** le bouton de commande (62) est relié au levier de commande (54) par une barre de renvoi (64) dont les deux extrémités arrière (68) et avant (64) sont articulées, sur le bouton de commande (62) et sur le levier de blocage (54) respectivement, autour d'axes verticaux.

3. Agencement selon l'une des revendications 1 ou 2, **caractérisé en ce que**, en position de blocage, le levier de blocage (54) s'étend sensiblement selon la direction transversale, et **en ce qu'**un bord avant (59) de son extrémité libre de blocage (58) s'étend en regard d'un tronçon transversal (50) en vis-à-vis du cran de blocage (48) qui se prolonge vers l'arrière par un tronçon en arc de cercle (52) pour permettre l'effacement de l'extrémité libre de blocage (58, 60) hors du cran de blocage (48) lorsque le support de données (12) est extrait hors de son logement (32).

4. Agencement selon l'une quelconque des revendications 1 à 3, **caractérisé en ce qu'**il comporte des moyens (72, 74) d'indexation du support de données (12) dans le logement (32) dans sa position active.

## Claims

1. Arrangement (10) for data exchange between a rigid or semirigid data carrier (12) and a data exchange device (14), particularly for reading data contained in the carrier, the arrangement (10) being fitted to a motor vehicle whose anti-theft functions are partially or completely provided by the processing of data, some of which data, contained in the data carrier (12), are representative of an authorized user, or of a group of authorized users, of the vehicle, and having a device (14) into which the carrier (12) in the general shape of a card is inserted manually in a forward direction into a housing (32) of the device (14) in which it occupies a specified active position, in which arrangement (10) the device (14) has means for longitudinally retaining the data carrier (12) in the active position in the device, and in which the data carrier (12) has, in a longitudinal orientation edge (26), a lateral securing notch (48), and the device (14) has an operated lever (54) for securing the carrier (12), this lever being mounted pivotably about a vertical axis (A) perpendicular to the plane containing the longitudinal direction (I) of introduction of the data carrier (12) into the device, between a securing position in which the free end (58) of the securing lever (54), or securing catch, extends into the securing notch (48), and a retracted position in which the securing catch (54, 58) is located outside the notch (48) to allow the data carrier (12) to be removed from the device (14), the arrangement (10) having an operating button (62) which causes the securing lever (54) to pivot from its retracted position towards its securing position, **characterized in that** the button is mounted to be longitudinally slidable with respect to the device (14) between a rear outward position (POS "0") in which the securing lever (54) is in the retracted position, and a forward inward position (POS "1 ") in which the securing lever (54) is in the position for securing the data carrier (12), the said operating button (62) which the user can operate being associated with an on/off switch (70) which controls an electrical starting circuit of the vehicle, the outward position (POS "0") of the button (62) corresponding to the "off" position of the switch and the inward position (POS "1") of the button corresponding to the "on" position of the switch.

2. Arrangement according to Claim 1, **characterized in that** the operating button (62) is connected to the operating lever (54) by a linking bar (64) whose rear end (68) and front end (64) are pivoted on the operating button (62) and on the securing lever (54) respectively, about vertical axes.

3. Arrangement according to either one of Claims 1 and 2, **characterized in that**, in the securing position, the securing lever (54) extends substantially in the transverse direction, and **in that** a front edge (59) of its free securing end (58) extends opposite a facing transverse portion (50) of the securing notch (48) which is extended to the rear by a portion in the form of an arc of a circle (52) to allow the free securing end (58, 60) to be withdrawn from the securing notch (48) when the data carrier (12) is removed from its housing (32).

4. Arrangement according to any one of Claims 1 to 3, **characterized in that** it has means (72, 74) for indexing the data carrier (12) in the housing (32) in its active position.

## Patentansprüche

1. Anordnung (10) für den Datenaustausch zwischen einem starren oder halbstarren Datenträger (12) und einer Datenaustauschvorrichtung (14), insbesondere für das Lesen von im Träger enthaltenen Daten, wobei die Anordnung (10) ein Kraftfahrzeug ausstattet, dessen Funktionen gegen Diebstahl teilweise oder vollständig durch Verarbeitung von Daten sichergestellt sind, von denen bestimmte, im Datenträger (12) enthaltene für einen berechtigten Benutzer oder eine Gruppe von berechtigten Benutzern des Fahrzeugs repräsentativ sind, und eine Vorrichtung (14) umfasst, in die der Träger (12) in allgemeiner Kartenform von Hand von hinten nach vorn in eine Aufnahme (32) der Vorrichtung (14) eingeführt wird, in der er eine bestimmte aktive Position einnimmt, bei welcher Anordnung (10) die Vorrichtung (14) Mittel zum Zurückhalten des Datenträgers (12) in Längsrichtung in der aktiven Position in der Vorrichtung umfasst, und bei der der Datenträger (12) in einem Rand (26) mit Orientierung in Längsrichtung eine seitliche Blockierungskerbe (48) umfasst, und die Vorrichtung (14) einen gesteuerten Hebel (54) für die Blockierung des Trägers (12) umfasst, der um eine zu der Ebene, in welcher sich die Längsrichtung (1) für die Einführung des Datenträgers (12) in die Vorrichtung befindet, senkrechte, vertikale Achse (A) zwischen einer Blockierungsposition, in welcher sich das freie Ende (58) des Blockierungshebels (54), oder Blockierungsfingers, in das Innere der Blockierungskerbe (48) erstreckt, und einer eingezogenen Position schwenkbar angebracht ist, in welcher sich der Blockierungsfinger (54, 58) außerhalb der Kerbe (48) befindet, um das Herausziehen des Datenträgers (12) aus der Vorrichtung (14) zu gestatten, die Anordnung (10) einen Steuerknopf (62) umfasst, der das Schwenken des Blockierungshebels (54) aus seiner zurückgezogenen Position zu seiner Blockierungsposition steuert, **dadurch gekennzeichnet, dass** der Knopf in Bezug auf die Vorrichtung (14) zwischen einer Position nach Hinten (POS "0"), in welcher sich der Blockierungshebel (54) in der zurückgezogenen Position befindet, und einer nach vorn eingeholten Position (POS "1") in Längsrichtung gleitend angebracht ist, in welcher sich der Blockierungshebel (54) in seiner Blockierungsposition für den Datenträger (12) befindet, wobei der Steuerknopf (62), auf den der Benutzer einwirken kann, mit einem An/Aus-Schalter (70) verbunden ist, der eine elektrische Anlassschaltung des Fahrzeugs steuert, wobei die herausgeholte Position (POS "0") des Knopfes (62) der Aus-Position des Schalters entspricht und die eingeholte Position (POS"1") des Knopfes einer An-Position des Schalters entspricht.

2. Anordnung nach Anspruch 1, **dadurch gekennzeichnet, dass** der Steuerknopf (62) mit dem Steuerhebel (54) durch einen Rückstellstab (64) verbunden ist, dessen beiden Enden, das hintere (68) und das vordere (64), am Steuerknopf (62) bzw. am Blockierungshebel (54) um vertikale Achsen herum schwenkbar sind.

3. Anordnung nach einem der Ansprüche 1 oder 2, **dadurch gekennzeichnet, dass** sich der Blockierungshebel (54) in der Blockierungsposition im Wesentlichen in Querrichtung erstreckt und dass sich ein vorderer Rand (59) seines freien Blockierungsendes (58) gegenüber einem Querabschnitt (50) gegenüber der Blockierungskerbe (48) erstreckt, der sich nach hinten durch einen Kreisbogenabschnitt (52) verlängert, um das Zurückstellen des freien Blockierungsendes (58, 60) aus der Blockierungskerbe (48) zu gestatten, wenn der Datenträger (12) aus seiner Aufnahme (32) herausgezogen wird.

4. Anordnung nach einem der Ansprüche 1 bis 3, **dadurch gekennzeichnet, dass** sie Mittel (72, 74) zur Indizierung des Datenträgers (12) in der Aufnahme (32) in seiner aktiven Position umfasst.
